# EUROPÄISCHE PATENTSCHRIFT

(11) **EP 4 165 970 B1**
(45) Veröffentlichungstag und Bekanntmachung des Hinweises auf die Patenterteilung: **14.05.2025**
(21) Anmeldenummer: 22201698.2
(22) Anmeldetag: 14.10.2022
(51) Int. Cl.: A01C 19/00, B60K 25/06

(54) **STALLDUNGSTREUER MIT EINER ENERGIEAUTARKEN WARNEINRICHTUNG**
MANURE SPREADER WITH AN ENERGY-AUTONOMOUS WARNING DEVICE
ÉPANDEUR D'ÉTABLE DOTÉ D'UN DISPOSITIF D'AVERTISSEMENT AUTONOME EN ÉNERGIE

(30) Priorität: 14.10.2021 DE 102021126677
(43) Veröffentlichungstag der Anmeldung: 19.04.2023
(73) Patentinhaber: B. Strautmann & Söhne GmbH u. Co. KG, 49196 Bad Laer (DE)
(72) Erfinder: Wegmann, Benjamin, 49497 Mettingen (DE); Rehbock, Daniel, 26871 Papenburg (DE); Dierkes, Markus, 48231 Warendorf (DE)
(74) Vertreter: Dr. Träger & Strautmann PAe PartG mbB

(56) Entgegenhaltungen:
- WO-A1-2020/222210
- CN-A- 112 829 582
- CN-U- 202 089 129
- US-A- 3 728 676
- US-A- 4 250 486

## Beschreibung

Die Erfindung betrifft eine gezogene Landmaschine nach dem Oberbegriff des Anspruchs 1, ein Verfahren zum Betrieb einer Landmaschine sowie eine energieautarke Warneinrichtung.

Bei der Landmaschine kann es sich beispielsweise um einen Stalldungstreuer, einen Ladewagen, ein Bodenbearbeitungsgerät, einen Kartoffelroder oder einen Rübenroder handeln. Wesentlich ist, dass die Landmaschine hinter ein Zugfahrzeug anhängbar und über einen Antriebsstrang an einen Nebenantrieb des Zugfahrzeuges, auch Zapfwelle genannt, koppelbar ist. Über die Zapfwelle des Zugfahrzeuges sind somit an der Landmaschine vorgesehene Arbeitsaggregate antreibbar.

Aus CN 202 089 129 U ist ein zweirädriger Hangschlepper mit einem ebenfalls zweirädrigen Anhänger bekannt. Auf dem Anhängerchassis kann eine Energieerzeugungs- und Aufladevorrichtung installiert sein, die außerdem einen Generator, einen Regler und eine Batterie umfasst. Der Energieabnahmemechanismus umfasst ein Antriebsrad, ein angetriebenes Rad und einen Transmissionsriemen. Vom angetriebenen Rad wird ein Drehmoment auf die Eingangswelle des Generators übertragen, so dass der Generator Strom erzeugt.

Aus WO 2020/222210 A1 ist eine mit Sensoren bestückte Gelenkwelle bekannt, die zudem einen integrierten Generator zur Stromerzeugung umfassen kann. Mittels des vom Generator erzeugten Stroms kann ein Alarm oder eine Warnung ausgegeben werden, wenn ein vordefiniertes Kriterium, beispielsweise die maximale Gelenkwellen-Auszugslänge von einem entsprechenden Sensor detektiert wird.

Aus US 3 728 676 A ist eine Rückwärtsfahr-Warneinrichtung für Fahrzeuge bekannt, die zum Beispiel an Baumaschinen einsetzbar ist und bei Rückwärtsfahrt Warnsignale abgibt.

Aus US 4 250 486 A ist ein Fahrzeug mit einer akustischen Rückwärtsfahr-Warneinrichtung bekannt. Die Warneirichtung soll überraschende Fahrbewegungen des Fahrzeuges akustisch signalisieren. Hierdurch sollen unterschiedliche Randbedingungen von Fahrzeugen mit Lastschaltgetrieben und Fahrzeugen mit Handschaltgetrieben berücksichtigt werden.

Aus CN 112 829 582 A ist ein Fahrzeugenergieerzeugungssystem bekannt, das einen Generator umfasst, der an das Getriebe des Fahrzeuges gekoppelt ist. Der Generator wandelt die kinetische Energie einer Getriebe-Transmissionswelle in elektrische Energie um.

Aus DE 20 2004 010 713 U1 ist eine Landmaschine in Form eines Streufahrzeuges bekannt. Das Streufahrzeug ist hinter einer Zugmaschine, beispielsweise einen Traktor, anhängbar und weist ein Arbeitsaggregat auf, welches zwei Fräswalzen und ein darunter angeordnetes Zweiteller-Breitstreuwerk umfasst. Die Fräswalzen und das Breitstreuwerk sind über eine Antriebswelle an die Zapfwelle des Traktors gekoppelt und werden somit vom Traktor angetrieben.

Auch bei bestimmungsgemäßem Gebrauch einer solchen Landmaschine gehen von den angetriebenen Teilen Gefahren aus, die durch die Anbringung einer Warneinrichtung, beispielsweise einer Blinkleuchte, reduziert werden können. Solche Warnsysteme, die in Abhängigkeit einer vordefinierten Maschinenfunktion, beispielsweise bei Einschalten eines bestimmten Antriebs oder bei Rückwärtsfahrt aktiviert werden, sind allgemein bekannt. Die elektrische Energieversorgung solcher Warneinrichtungen erfolgt über das Zugfahrzeug. Nachteilig hieran ist, dass die Warnfunktion bei Unterbrechung der Energieversorgung zum Zugfahrzeug nicht mehr gewährleistet ist.

Aufgabe der Erfindung ist es, die beschriebenen Nachteile zu beseitigen und eine Landmaschine vorzuschlagen, deren Warneinrichtung nicht von der Stromversorgung durch eine Zugmaschine abhängig ist.

Diese Aufgabe wird gelöst durch eine Landmaschine mit den Merkmalen des Anspruchs 1.

Die Landmaschine umfasst eine von einer elektrischen Energieversorgung eines Zugfahrzeuges autarke Warneinrichtung. Unter einer energieautarken Warneinrichtung wird somit eine Warneinrichtung verstanden, die nicht an das elektrische Bordnetz einer Zugmaschine gekoppelt ist. Eine energieautarke Warneinrichtung im Sinne der Erfindung kann aber indirekt über einen mechanischen, gegebenenfalls auch hydraulischen, Antriebsstrang an die Energieversorgung der Zugmaschine gekoppelt sein. Zur Erzeugung und/oder Bereitstellung der von der energieautarken Warneinrichtung benötigten Energie weist die Landmaschine einen Energiegenerator oder einen Energiespeicher auf.

Weiterhin umfasst die energieautarke Warneinrichtung wenigstens folgende Komponenten:
- einen an den Antriebsstrang der Landmaschine gekoppelten Generator zur Erzeugung von elektrischer Energie;
- wenigstens einen Sensor zur Detektion einer Fahrbewegung der Landmaschine und/oder einer Bewegung des Arbeitsaggregats der Landmaschine;
- einen Signalgeber;
- eine Steuerung zur Aktivierung des Signalgebers, wobei die Energieversorgung der Steuerung durch die vom Generator erzeugte elektrische Energie erfolgt.

Die energieautarke Warneinrichtung umfasst ferner eine Zeitsteuerung zur zeitversetzten Aktivierung und/oder Deaktivierung des Signalgebers. Hiermit kann erreicht werden, dass der Signalgeber zeitversetzt an und/oder abgeschaltet wird. Beispielsweise kann eine Blinkleuchte noch einige Sekunden blinken, nachdem die Antriebseinrichtung für das Arbeitsaggregat bereits abgeschaltet ist. Hierdurch kann sichergestellt werden, dass auch während des Auslaufens rotierender Teile, beispielsweise der Fräswalze eines Stalldungstreuers, noch ein Warnsignal vom Signalgeber abgegeben wird.

Bei dem Signalgeber kann es sich beispielsweise um einen optischen oder akustischen Signalgeber handeln, wobei die Energieversorgung des Signalgebers ebenso wie die Energieversorgung des Sensors vorzugsweise durch die vom Generator erzeugte elektrische Energie erfolgt.

Die vom Generator erzeugte elektrische Energie wird vorzugsweise mit einer Spannung von 12 Volt bereitgestellt und ist damit an die Bordnetze gängiger Traktoren und Landmaschinen angepasst. Die Kopplung des Generators an den Antriebsstrang hat mehrere Vorteile. Zum einen lässt sich an den sich im Arbeitseinsatz drehenden Antriebswellen besonders einfach elektrische Energie gewinnen. Weiterhin ist die zum Betrieb der Warnanlage erforderliche Energiemenge im Verhältnis zum Energiebedarf der Arbeitsaggregate so gering, dass der mechanische Leistungsverlust durch das geringfügige Umwandeln von mechanischer Energie in elektrische Energie nahezu vernachlässigbar ist.

Schließlich ist es von besonderem Vorteil, dass der Antriebsstrang die benötigte Energie gerade dann liefert, wenn sie zum Betrieb der Warnanlage benötigt wird: Bei abgestelltem mechanischem Antrieb, beziehungsweise bei still stehendem Antriebsstrang befinden sich auch die Arbeitsaggregate im Ruhemodus und es wird in der Regel keine Energie für die Warneinrichtung benötigt. Ausnahmen von der genannten Regel können dann vorliegen, wenn ein in die Warneinrichtung integrierter Signalgeber zeitversetzt aktiviert bzw. deaktiviert werden soll. Grundsätzlich lässt sich jedoch feststellen, dass dann, wenn eine Antriebswelle in Rotation versetzt wird, auch die Arbeitsaggregate aktivierbar sind und Energie benötigt wird, um die Warneinrichtung bei Vorliegen vordefinierter Betriebszustände zu aktivieren.

Es kann vorgesehen sein, dass die Warneinrichtung automatisch aktiviert wird, sobald die Antriebswelle in Rotation versetzt und vom Generator Energie erzeugt wird. Vereinfacht gesagt, wird in einem solchen Fall der in die Warneinrichtung integrierter Signalgeber, beispielweise eine Blinkleuchte, angeschaltet, sobald sich die Antriebswelle dreht.

Vorzugsweise umfasst die Warneinrichtung jedoch neben dem Generator und dem Signalgeber einen Sensor sowie eine Steuerung zur Aktivierung des Signalgebers. Hierdurch ist es möglich, den Signalgeber in Abhängigkeit eines oder mehrerer vordefinierter Betriebszustände zu aktivieren.

Beispielsweise kann vordefiniert sein, dass der Signalgeber nur dann aktiviert wird, wenn weiterhin der Sensor eine vordefinierte Bewegung detektiert. Bei der Bewegung kann es sich beispielsweise um eine Vorwärtsbewegung der Landmaschine insgesamt oder um eine Bewegung eines Arbeitsaggregats, beispielsweise der Rotation einer Fräswalze, handeln.

Die Steuerung wird vorzugsweise mit elektrischen Relais geschaltet und kann beispielsweise folgendermaßen strukturiert sein:

| Zustands-Nr. | Generator-Spannung [Volt] | Sensor Drehzahl Streuwerk | Signalgeber |
|---|---|---|---|
| | | 1 = detektierte Bewegung | |
| | | 0 = Stillstand | |
| 1 | 0 | 0 | Aus |
| 2 | 12 | 0 | Aus |
| 3 | 0 | 1 | Aus |
| 4 | 12 | 1 | Ein |

In einer bevorzugten Ausführungsform handelt es sich um einen Generator nach dem Dynamoprinzip, der einen ähnlichen oder gleichen Aufbau wie bekannte Fahrraddynamos aufweist.

Bei einem Dynamo handelt es sich um einen kleinen Einphasen-Wechselstromgenerator oder Gleichstromgenerator. Angetrieben wird der Dynamo von der rotierenden Antriebswelle der Landmaschine. Je nach Ausführung rotiert ein Permanentmagnet in einer feststehenden Ständerwicklung bzw. rotiert eine Spule in einem feststehenden Permanentmagneten, so wird jeweils eine Spannung induziert. Weitere Ausführungsformen und/oder Kombinationen sind denkbar. Im Ergebnis liefert somit der nach dem Dynamoprinzip arbeitende Generator die für den Betrieb der Warneinrichtung benötigte Energie. Entsprechende Geräte haben eine unkomplizierte Technik, sind robust und kostengünstig.

Bei dem Signalgeber kann es sich um einen optischen und/oder akustischen Signalgeber handeln. Die Energieversorgung des Signalgebers erfolgt vorzugsweise durch die vom Generator erzeugte Energie, kann aber auch durch eine Batterie bereitgestellt werden. Bei dem optischen Signalgeber kann es sich beispielsweise um eine Leuchte oder eine Blinkleuchte handeln. Als akustische Warneinrichtung ist beispielsweise eine Hupe einsetzbar.

Bei dem Sensor kann es sich beispielsweise um einen Bewegungssensor, einen Drehzahlsensor, einen Näherungsschalter, einen optischen Sensor oder einen Ultraschallsensor handeln. Mittels eines Drehzahlsensor können die Drehzahl oder auch Drehzahldifferenzen von Antriebswellen und anderen rotierenden Teilen überwacht werden. In klassischer elektromechanischer Ausführung werden sie direkt mit der Welle verbunden. Beim Erreichen bestimmter Drehzahlen schließen oder öffnen sie über ein Fliehkraftschaltsystem Kontakte, die z. B. in Meldesystemen oder Ablaufsteuerungen eingebunden sind. Näherungsschalter sind Sensoren, die auf Annäherung, das heißt ohne direkten Kontakt, berührungsfrei reagieren.

Beispielsweise kann ein Drehzahlsensor in die Achse des Fahrwerks integriert sein. Als Randbedingungen zur Aktivierung des Signalgebers kann vorgesehen sein, dass zum einen die Antriebswelle rotiert und zum anderen die Landmaschine bewegt wird, also vorwärts oder rückwärts fährt. In diesem Fall wird vom Generator Strom erzeugt und vom Sensor eine Bewegung detektiert. Die Daten werden über elektrische Leitungen oder per Funk an die Steuerung übertragen und dort verarbeitet. Sind beide Randbedingungen erfüllt, wird von der Steuerungseinrichtung ein Aktivierungssignal an den Signalgeber übermittelt. Sobald entweder die Landmaschine oder der Antriebsstrang still gesetzt werden, wird der Signalgeber mittels eines Deaktivierungssignals von der Steuerung abgeschaltet.

Die Steuerung ist, wie bereits weiter oben erläutert, mit elektrischen Relais schaltbar. Bei einer Warneinrichtung mit integriertem Verzögerungsglied kann sie beispielsweise folgendermaßen strukturiert sein:

| Zustands-Nr. | Generator-Spannung [Volt] | Sensor Drehzahl Streuwerk | Zeitversatz nach / vor Signalwechsel des Sensors abgelaufen? | Signalgeber |
|---|---|---|---|---|
| | | 1 = detektierte Bewegung | | |
| | | 0 = Stillstand | | |
| 1 | 0 | 0 | Nein | Aus |
| 2 | 12 | 0 | Nein | Ein |
| 3 | 0 | 1 | Nein | Aus |
| 4 | 12 | 1 | Nein | Ein |
| 5 | 0 | 0 | Ja | Aus |
| 6 | 12 | 0 | Ja | Aus |
| 7 | 0 | 1 | Ja | Aus |
| 8 | 12 | 1 | Ja | Ein |

Die erfindungsgemäße Aufgabe wird auch gelöst durch ein Verfahren zum Betrieb einer Landmaschine mit einer energieautarken Warneinrichtung.

Das erfindungsgemäße Verfahren umfasst folgende Verfahrensschritte:
- Bereitstellen einer gezogenen Landmaschine, umfassend ein Fahrwerk mit wenigstens einer Fahrzeugachse und einen Antriebstrang für mindestens ein Arbeitsaggregat, wobei der Antriebsstrang wenigstens eine von einem Zugfahrzeug antreibbare Antriebswelle umfasst;
- Erzeugen von elektrischer Energie mittels eines an den Antriebsstrang der Landmaschine gekoppelten Generators;
- Versorgen eines an die Landmaschine gekoppelten Sensors mit der vom Generator erzeugten elektrischen Energie;
- Detektion einer Bewegung der Landmaschine und/oder eines Arbeitsaggregats der Landmaschine mittels eines Sensors;
- Übermittlung von vom Sensor ermittelter Sensor-Ist-Werte und/oder von Generator-Ist-Betriebswerten des Generators an eine Steuerung;
- Abgleich des Sensor-Ist-Wertes und/oder der Generator-Ist-Betriebswerte mit wenigstens einem in der Steuerung hinterlegten Vorgabewert;
- Aktivierung eines optischen und/oder akustischen Signalgebers durch die Steuerung bei Detektion einer Übereinstimmung zwischen wenigstens einem Sensor-Ist-Wert und/oder einem Generator-Ist-Wertes mit einem vordefinierten Sollwert oder einer Sollwert-Kombination.

Bei der genannten Steuerung kann es sich im einfachsten Fall um ein Relais handeln. Die Steuerung kann aber auch komplexer sein und beispielsweise einen integrierten Schaltkreis in Form eines Mikrocontrollers umfassen.

Ein wesentlicher Vorteil dieses Verfahrens ist, dass die Warneinrichtung unabhängig von der elektrischen Stromversorgung einer Zugmaschine und damit autark und ausfallgeschützt ist. Um sicherzustellen, dass die Landmaschine nur dann in Betrieb genommen werden kann, wenn auch die energieautarke Warneinrichtung funktionsfähig ist, können sekundäre Sicherungskreise vorgesehen sein, die bei Störung oder Ausfall beispielsweise des Signalgebers oder des Generators eine Inbetriebnahme der Landmaschine ausschließen.

Die Aktivierung und/oder Deaktivierung des optischen und/oder akustischen Signalgebers um eine vordefinierte Zeit erfolgt verzögert nach Detektion einer Übereinstimmung zwischen dem wenigstens einem Sensor-Ist-Wert und/oder Generator-Ist-Wertes mit dem vordefinierten Sollwert oder der Sollwert-Kombination. Beispielsweise kann die Steuerung der Antriebs- oder Fahreinrichtungen so auf die Aktivierung des Signalgebers abgestimmt sein, dass zunächst der Signalgeber aktiviert und zeitversetzt dazu das Arbeitsaggregat in Funktion versetzt wird. Umgekehrt kann weiterhin vorgesehen sein, dass der Signalgeber erst zeitversetzt nach Abschalten des Arbeitsaggregats deaktiviert wird.

Die Aufgabe der Erfindung wird weiterhin gelöst durch eine von der elektrischen Energie eines Zugfahrzeuges autarke Warneinrichtung für eine gezogene Landmaschine, die folgende Komponenten umfasst:
- einen Generator zur Erzeugung von elektrischer Energie, der an einen Antriebsstrang einer Landmaschine koppelbar ist;
- wenigstens einen Sensor zur Detektion einer Fahrbewegung der Landmaschine und/oder einer Bewegung eines Arbeitsaggregats der Landmaschine, wobei die Energieversorgung des Sensors durch die vom Generator erzeugt elektrische Energie erfolgt;
- einen Signalgeber;
- eine Steuerung zur Aktivierung des Signalgebers.

Eine solche Warneinrichtung kann beispielsweise als Set bereitgestellt werden und zum nachträglichen Anbau an Landmaschinen vorgesehen sein. Die Komponenten lassen sich relativ einfach und universell nachträglich an Landmaschinen anbauen und erhöhen so deren Arbeitssicherheit.

Weitere, die Erfindung verbessernde Maßnahmen, werden nachstehend mit der Beschreibung von bevorzugten Ausführungsbeispielen der Erfindung anhand der beigefügten Figur näher dargestellt.

Die Figuren der Zeichnung, deren Beschreibung sowie die Ansprüche enthalten zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten im Betriebsmodus.

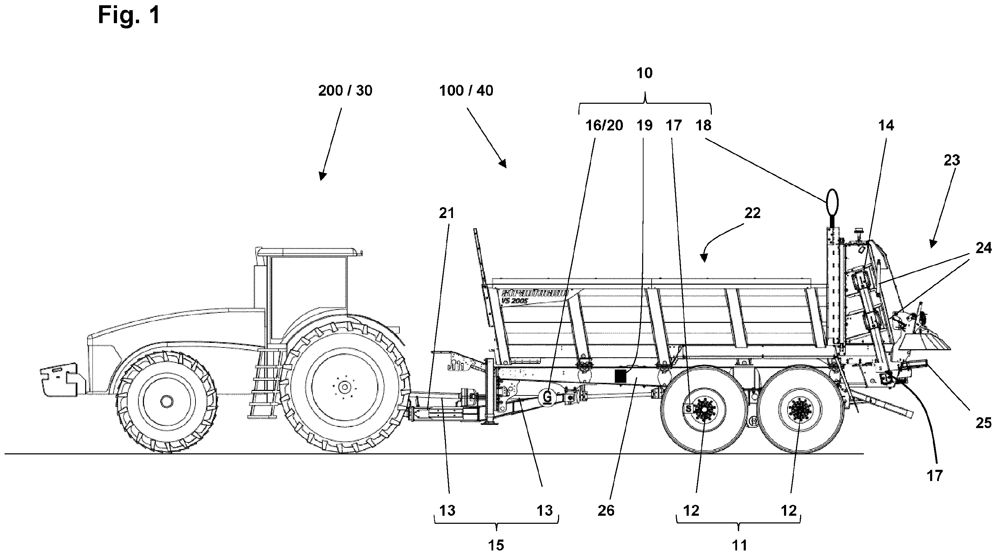

Figur 1 zeigt ein aus einer Zugmaschine 200 und einer Landmaschine 100 gebildetes Fahrzeug-Gespann. Bei der Zugmaschine 200 handelt es sich um einen Traktor 30, bei der Landmaschine 100 um einen Stalldungstreuer 40.

Der Stalldungstreuer 40 weist eine Deichsel 21 auf, die an eine nicht näher dargestellte Anhängung des Traktors 30 gekoppelt ist. Der Traktor weist einen Nebenantrieb in Form einer Zapfwelle auf, an die eine Antriebswelle 13 des Stalldungstreuers 40 gekoppelt ist. Mehrere Antriebswellen 13 bilden gemeinsam einen Antriebsstrang 15 aus.

Der Stalldungstreuer 40 umfasst weiterhin einen Laderaum 22 mit einem den Laderaumboden umschlingenden Kratzboden. Mittels des Kratzbodens wird im Arbeitseinsatz im Laderaum 22 befindliches Streugut einem heckseitig am Laderaum 22 angeordneten Streuwerk 23 zugeführt. Bei dem in Fig. 1 abgebildeten Ausführungsbeispiel weist das Streuwerk 23 zwei horizontale Streuwalzen 24 und zwei darunter angebrachte Streuteller 25 auf.

Der Laderaum 22 ist auf einem Chassis 26 gelagert. Das Chassis 26 wiederum wird von einem Fahrwerk 11 mit zwei Achsen 12 getragen.

An den Antriebsstrang 15 ist ein Generator 16 in Form eines Dynamos 20 gekoppelt. Sobald eine Bedienperson die Zapfwelle des Traktors 200 startet, werden die Antriebswellen 13 des Antriebsstrangs 15 in Rotation versetzt und der an den Antriebsstrang 15 gekoppelte Dynamo 20 erzeugt elektrische Energie.

Im dargestellten Ausführungsbeispiel dient die so erzeugte Energie sowohl zum Betrieb von Sensoren 17, als auch zum Betrieb eines Signalgebers 18 und einer Steuerung 19. Im dargestellten Ausführungsbeispiel sind zwei Sensoren 17 vorgesehen. Bei dem einen Sensor 17 handelt es sich um einen in eine Fahrzeugachse 12 integrierten Drehzahlwächter beziehungsweise Fahrerkennungssensor. Bei dem anderen Sensor 17 handelt es sich um einen in das Streuwerk 23 integrierten Sensor. Alternativ zu einer Integration eines Sensors in 17 in die Fahrzeugachse 12 beziehungsweise in die Achse einer Streuwalze 24 kann die zu detektierende Drehbewegung auch anders erfasst werden, beispielsweise mittels eines um die Bremstrommel geschlungenen Sensorbleches (Zahnkranzes). Die Sensoren 17 liefern in einer einfachen Ausführung eine Ja-Nein Information darüber, ob eine Achse sich bewegt und somit eine Fahrbewegung oder Drehbewegung vorliegt oder nicht. In einer verbesserten Ausführung ist auch ein Sensor 17 einsetzbar, der weitere oder andere Informationen bereitstellt, beispielsweise eine Information über die momentane Geschwindigkeit der Landmaschine 100.

Die vom Sensor 17 bereitgestellten Daten werden an die Steuerung 19 übertragen. Auf Basis dieser Daten wird eine erste für die Aktivierung des Signalgebers 18 benötigte Information bereitgestellt. Je nachdem, wie die Steuerung 19 konzipiert ist, kann als Bedingung zur Aktivierung des Signalgebers 18 vorgesehen sein, dass der Sensor 17 grundsätzlich eine Fahrbewegung oder, bei der verbesserten Ausführungsform, eine Fahrbewegung mit einer bestimmten Mindestgeschwindigkeit detektiert hat. Generator 16, Sensor 17, Signalgeber 18 und Steuerung 19 bilden damit eine von der elektrischen Energie der Zugmaschine 200 autarke Warneinrichtung 10.

Im Ergebnis wird bei dem dargestellten Ausführungsbeispiel der Signalgeber 18 aktiviert, wenn:
- der Nebentrieb des Traktors 200 angeschaltet ist, hierdurch wenigstens eine Antriebswelle 13 der Landmaschine 100 in Rotation versetzt wird und somit vom Dynamo 20 eine Spannung mit einem vordefinierten Wert, beispielsweise 12 Volt, bereitgestellt wird;
- der Sensor 17 eine Bewegung detektiert und einen vordefinierten Signalwert an die Steuerung 19 überträgt.

Alternativ oder zusätzlich kann ein weiterer Sensor an einem Arbeitsaggregat der Landmaschine, im vorliegenden Fall beispielsweise am Streuwerk 14 angebracht sein. Die Steuerung 19 kann dann so konzipiert sein, dass der Signalgeber nur dann aktiviert wird, wenn sowohl eine Fahrbewegung als auch eine Bewegung des Streuwerks, beispielsweise eine Rotation einer Streuwalze, detektiert wird.

Im dargestellten Ausführungsbeispiel ist in die Steuerung 19 ein Verzögerungsglied integriert. Das Verzögerungsglied bewirkt eine zeitversetzte Aktivierung des Signalgebers 18. Mittels einer zeitversetzten Aktivierung kann erreicht werden, dass der Signalgeber zeitversetzt nach dem Abstellen des Traktor-Nebenantriebs oder dem Stillstand der Landmaschine 100 deaktiviert wird. Damit dem Signalgeber 18 auch bei stillstehendem Antriebsstrang 15 die benötigte elektrische Energie zur Verfügung steht, kann eine Batterie oder ein Akku in den Stromkreis der Warneinrichtung 10 integriert sein. Der Akku wird vom Generator 16 bzw. Dynamo 20 regelmäßig nachgeladen, so dass die Energieversorgung des Signalgebers 18 sichergestellt ist.

Die im Ausführungsbeispiel beschriebene Warneinrichtung 10 kann herstellerseitig in eine Landmaschine integriert sein, sie kann aber auch als Nachrüstset bereitgestellt werden und nachträglich an eine vorhandene Landmaschine angebaut werden.

Selbstverständlich sind auch andere Konzeptionen der energieautarken Warneinrichtung 10 möglich, um an anderen gezogenen Landmaschinen, beispielsweise an Bodenbearbeitungsmaschinen, Kartoffelrodern, Ladewagen etc. die Gefahr von Unfällen zu reduzieren. Die Auswahl geeigneter Generatoren 16, Sensoren 17 und Signalgeber 18 sowie die Konzeption der Steuerung 19 erfolgt dann in Abhängigkeit vom jeweiligen Anwendungsfall.

### Bezugszeichenliste

- 10: Warneinrichtung
- 11: Fahrwerk
- 12: Fahrzeugachse
- 13: Antriebswelle
- 14: Arbeitsaggregat
- 15: Antriebsstrang
- 16: Generator
- 17: Sensor
- 18: Signalgeber
- 19: Steuerung
- 20: Dynamo
- 21: Deichsel
- 22: Laderaum
- 23: Streuwerk
- 24: Streuwalze
- 25: Streuteller
- 26: Chassis
- 27: -
- 28: -
- 29: -
- 30: Traktor
- 40: Stalldungstreuer

- 100: Landmaschine
- 200: Zugmaschine

## Patentansprüche

1. Gezogene Landmaschine (100), umfassend:
- ein Fahrwerk (11) mit wenigstens einer Fahrzeugachse (12),
- einen Antriebstrang (15) für mindestens ein Arbeitsaggregat (14), wobei der Antriebsstrang (15) wenigstens eine von einem Zugfahrzeug (200) antreibbare Antriebswelle (13) und eine von einer elektrischen Energieversorgung des Zugfahrzeuges (200) energieautarke Warneinrichtung (10) umfasst,
**dadurch gekennzeichnet, dass** die energieautarke Warneinrichtung (10) wenigstens folgende Komponenten umfasst:
- einen an den Antriebsstrang (15) der Landmaschine (100) gekoppelten Generator (16) zur Erzeugung von elektrischer Energie;
- wenigstens einen Sensor (17) zur Detektion einer Fahrbewegung der Landmaschine (100) und/oder einer Bewegung des Arbeitsaggregats (14) der Landmaschine (100);
- einen Signalgeber (18);
- eine Steuerung (19) zur Aktivierung des Signalgebers (18);
- eine Zeitsteuerung zur zeitversetzten Aktivierung und/oder Deaktivierung des Signalgebers (18).

2. Gezogene Landmaschine (100) nach Anspruch 1, **dadurch gekennzeichnet, dass** es sich bei dem Generator (16) um einen Dynamo (20) handelt.

3. Gezogene Landmaschine (100) nach einem der Ansprüche 1 oder 2, **dadurch gekennzeichnet, dass** es sich bei dem Signalgeber (18) um einen optischen und/oder akustischen Signalgeber handelt, wobei die Energieversorgung des Signalgebers (18) vorzugsweise durch die vom Generator (16) erzeugte Energie erfolgt.

4. Gezogene Landmaschine (100) nach einem der Ansprüche 1 bis 3, **dadurch gekennzeichnet, dass** es sich bei dem Sensor (17) um einen Bewegungssensor, einen Drehzahlsensor, einen Näherungsschalter, einen optischen Sensor oder einen Ultraschallsensor handelt.

5. Verfahren zum Betrieb einer Landmaschine (100) mit einer energieautarken Warneinrichtung (10), **gekennzeichnet durch** die Verfahrensschritte:
- Bereitstellen einer gezogenen Landmaschine (100), umfassend ein Fahrwerk (11) mit wenigstens einer Fahrzeugachse (12) und einen Antriebstrang (15) für mindestens ein Arbeitsaggregat (14), wobei der Antriebsstrang (15) wenigstens eine von einem Zugfahrzeug (200) antreibbare Antriebswelle (13) umfasst;
- Erzeugen von elektrischer Energie mittels eines an den Antriebsstrang (15) der Landmaschine (100) gekoppelten Generators (16);
- Versorgen einer an die Landmaschine gekoppelten Steuerung (19) mit der vom Generator (16) erzeugten elektrischen Energie;
- Detektion einer Bewegung der Landmaschine (100) und/oder eines Arbeitsaggregats (14) der Landmaschine (100) mittels eines Sensors (17);
- Übermittlung von vom Sensor (17) ermittelter Sensor-Ist-Werte und/oder von Generator-Ist-Betriebswerten des Generators (16) an die Steuerung (19);
- Abgleich des Sensor-Ist-Wertes und/oder der Generator-Ist-Betriebswerte mit wenigstens einem in der Steuerung (19) hinterlegten Vorgabewerte;
- Aktivierung eines optischen und/oder akustischen Signalgebers (18) durch die Steuerung (19) bei Detektion einer Übereinstimmung zwischen wenigstens einem Sensor-Ist-Wert und/oder eines Generator-Ist-Wertes mit einem vordefinierten Sollwert oder einer Sollwert-Kombination,
wobei die Aktivierung des optischen und/oder akustischen Signalgebers (18) um eine vordefinierte Zeit verzögert nach Detektion einer Übereinstimmung zwischen dem wenigstens einem Sensor-Ist-Wert und/oder Generator-Ist-Wertes mit dem vordefinierten Sollwert oder der Sollwert-Kombination erfolgt.

## Claims

1. Towed agricultural machine (100), comprising:
- a chassis (11) with at least one vehicle axle (12),
- a drive train (15) for at least one working unit (14), wherein the drive train (15) comprises at least one drive shaft (13) that can be driven by a towing vehicle (200) and a warning device (10) that is energy-autonomous from an electrical energy supply of the towing vehicle (200),
**characterised in that** the energy-autonomous warning device (10) comprises at least the following components:
- a generator (16) coupled to the drive train (15) of the agricultural machine (100) for generating electrical energy;
- at least one sensor (17) for detecting a driving movement of the agricultural machine (100) and/or a movement of the working unit (14) of the agricultural machine (100);
- a signal generator (18);
- a control unit (19) for activating the signal generator (18);
- a timer for the time-delayed activation and/or deactivation of the signal generator (18).

2. Towed agricultural machine (100) according to claim 1, **characterised in that** the generator (16) is a dynamo (20).

3. Towed agricultural machine (100) according to one of claims 1 or 2, **characterised in that** the signal generator (18) is an optical and/or acoustic signal generator, wherein the energy supply of the signal generator (18) is preferably effected by the energy generated by the generator (16).

4. Towed agricultural machine (100) according to one of claims 1 to 3, **characterised in that** the sensor (17) is a motion sensor, a rotational speed sensor, a proximity switch, an optical sensor or an ultrasonic sensor.

5. Method for operating an agricultural machine (100) with an energy-autonomous warning device (10), **characterised by** the method steps of:
- providing a towed agricultural machine (100), comprising a chassis (11) with at least one vehicle axle (12) and a drive train (15) for at least one working unit (14), wherein the drive train (15) comprises at least one drive shaft (13) that can be driven by a towing vehicle (200);
- generating electrical energy by means of a generator (16) coupled to the drive train (15) of the agricultural machine (100);
- supplying a control unit (19) coupled to the agricultural machine with the electrical energy generated by the generator (16);
- detection of a movement of the agricultural machine (100) and/or of a working unit (14) of the agricultural machine (100) by means of a sensor (17);
- transmission of the actual sensor values determined by the sensor (17) and/or of the actual operating values of the generator (16) to the control unit (19);
- comparison of the actual sensor value and/or the actual operating values of the generator with at least one default value stored in the control unit (19);
- activation of a visual and/or acoustic signal generator (18) by the control unit (19) on detection of a match between at least one actual sensor value and/or one actual generator value and a predefined setpoint value or a setpoint value combination,
wherein the activation of the optical and/or acoustic signal generator (18) is delayed by a predefined time after detection of a match between the at least one sensor actual value and/or generator actual value and the predefined setpoint value or setpoint value combination.

## Revendications

1. Machine agricole tractée (100), comprenant :
- un châssis (11) avec au moins un essieu de véhicule (12),
- une chaîne cinématique (15) pour au moins un groupe de travail (14), la chaîne cinématique (15) comprenant au moins un arbre d'entraînement (13) pouvant être entraîné par un véhicule tracteur (200) et un dispositif d'avertissement (10) autosuffisant en énergie par rapport à une alimentation en énergie électrique du véhicule tracteur (200),
**caractérisé en ce que** le dispositif d'avertissement (10) autonome en énergie comprend au moins les composants suivants:
- un générateur (16) couplé à la chaîne cinématique (15) de la machine agricole (100) pour produire de l'énergie électrique;
- au moins un capteur (17) pour détecter un mouvement de déplacement de la machine agricole (100) et/ou un mouvement du groupe de travail (14) de la machine agricole (100);
- un générateur de signaux (18);
- une commande (19) pour l'activation du générateur de signaux (18);
- une commande temporelle pour l'activation et/ou la désactivation différée du générateur de signaux (18).

2. Machine agricole tractée (100) selon la revendication 1, **caractérisée en ce que** le générateur (16) est une dynamo (20).

3. Machine agricole tractée (100) selon l'une des revendications 1 ou 2, **caractérisée en ce que** le générateur de signaux (18) est un générateur de signaux optiques et/ou acoustiques, l'alimentation en énergie du générateur de signaux (18) étant de préférence assurée par l'énergie générée par le générateur (16).

4. Machine agricole tractée (100) selon l'une des revendications 1 à 3, **caractérisée en ce que** le capteur (17) est un capteur de mouvement, un capteur de vitesse de rotation, un capteur de proximité, un capteur optique ou un capteur à ultrasons.

5. Procédé de fonctionnement d'une machine agricole (100) avec un dispositif d'avertissement (10) autonome en énergie, **caractérisé par** les étapes de procédé suivantes :
- Mise à disposition d'une machine agricole tractée (100), comprenant un châssis (11) avec au moins un essieu de véhicule (12) et une chaîne cinématique (15) pour au moins un groupe de travail (14), la chaîne cinématique (15) comprenant au moins un arbre de transmission (13) pouvant être entraîné par un véhicule tracteur (200);
- Produire de l'énergie électrique au moyen d'une génératrice (16) couplée à la chaîne cinématique (15) de la machine agricole (100);
- Alimentation d'une commande (19) couplée à la machine agricole avec l'énergie électrique générée par le générateur (16);
- Détection d'un mouvement de la machine agricole (100) et/ou d'un groupe de travail (14) de la machine agricole (100) au moyen d'un capteur (17);
- Transmission à la commande (19) de valeurs réelles de capteur déterminées par le capteur (17) et/ou de valeurs réelles de fonctionnement du générateur (16);
- Comparaison de la valeur réelle du capteur et/ou des valeurs réelles de fonctionnement du générateur avec au moins une valeur de consigne enregistrée dans la commande (19);
- Activation d'un générateur de signaux optiques et/ou acoustiques (18) par la commande (19) en cas de détection d'une concordance entre au moins une valeur réelle de capteur et/ou une valeur réelle de générateur avec une valeur de consigne ou une combinaison de valeurs de consigne prédéfinie,
l'activation du générateur de signaux optiques et/ou acoustiques (18) étant retardée d'un temps prédéfini après la détection d'une concordance entre au moins une valeur réelle de capteur et/ou une valeur réelle de générateur avec la valeur de consigne prédéfinie ou la combinaison de valeurs de consigne.
